(19) Europäisches Patentamt
European Patent Office
Office européen des brevets

(11) **EP 2 394 034 B1**

## (12) EUROPEAN PATENT SPECIFICATION

(45) Date of publication and mention
of the grant of the patent:
**26.12.2012 Bulletin 2012/52**

(21) Application number: **10703452.2**

(22) Date of filing: **05.02.2010**

(51) Int Cl.:
*F01N 3/035* (2006.01)     *F01N 11/00* (2006.01)
*F02D 41/02* (2006.01)     *F02D 41/40* (2006.01)
*F01N 9/00* (2006.01)

(86) International application number:
**PCT/EP2010/051420**

(87) International publication number:
**WO 2010/089370 (12.08.2010 Gazette 2010/32)**

(54) **ON-BOARD VEHICLE DIAGNOSTIC OF AN OXIDATION CATALYST**

BORD-FAHRZEUGDIAGNOSTIK FÜR EINEN OXIDATIONSKATALYSATOR

DIAGNOSTIC EMBARQUÉ DE VÉHICULE D'UN CATALYSEUR D'OXYDATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **05.02.2009 EP 09152180**

(43) Date of publication of application:
**14.12.2011 Bulletin 2011/50**

(73) Proprietor: **Delphi Technologies Holding S.à.r.l.
4940 Bascharage (LU)**

(72) Inventors:
• **PARMENTIER, Michael
B-6747 Chatillon (BE)**
• **SCHMITT, Julien
F-57970 Kuntzig (FR)**

(74) Representative: **Gregory, John David Charles et al
Delphi Diesel Systems
Patent Department
Courteney Road
Gillingham
Kent ME8 0RU (GB)**

(56) References cited:
EP-A- 1 154 131     EP-A1- 1 323 905
FR-A- 2 877 043     FR-A- 2 914 693
US-A1- 2005 279 156

**Description**

FIELD OF THE INVENTION

The present invention generally relates to on-board diagnostics, and more particularly to a method for monitoring the performance of an oxidation catalyst in the exhaust-line of an internal combustion engine.

BACKGROUND OF THE INVENTION

Catalytic converters are now conventionally featured on exhaust systems of automotive vehicles to purify the engine exhaust gases. In diesel engines for example, the most commonly used catalytic converter is the diesel oxidation catalyst (DOC), typically associated with a Diesel Particulate Filter (DPF). Its main function is to convert hydrocarbons (HC) in the exhaust gas stream to water ($H_2O$) and carbon dioxide ($CO_2$). These converters often reach 90% effectiveness, virtually eliminating diesel odor and helping to reduce visible particulates (soot).

The need for catalytic converters, especially on motor vehicles, increases with the increasingly stringent environmental protection regulations in many countries. Also, with the upcoming EURO V and VI regulations, the on-board diagnostic of DOCs becomes mandatory for a large number of vehicles. Such diagnostic consists in determining the performance, i.e. conversion efficiency, of the catalyst to detect whether the catalyst is still able to purify the exhaust gas according to the regulations, or whether it is too old/damaged and should be replaced.

Indeed, over the long term, in other words over an average mileage on the order of 100 000 km or an average operating time on the order of 1 000 hours in the case of a motor vehicle engine, the capacity of a catalytic converter to convert the pollutant decreases steadily. That process is called "ageing" and it is caused by manifold physical and chemical environmental factors, which are unavoidable no matter how carefully the catalytic converter is handled. The process of ageing depends to a great extend on the strain to which the catalytic converter is exposed in its typical operation. Another phenomenon that may alter the conversion efficiency of a catalytic converter is "poisoning", e.g. if a fuel of poor quality is used.

Due to such usage-specific ageing of catalytic converters, it is virtually impossible to make general predictions regarding the durability of a catalytic converter. Further, general guidelines, if any, on the length of time in use or the mileage after which a catalytic converter would have to be replaced, would have to be especially stringent to in order to prevent inactive catalytic converters from continuing to be used. But this would obviously imply replacing, for the sake of prevention, catalytic converters that are still significantly useable.

The remedy for this situation is thus the monitoring of the functional capability of each catalytic converter that is carried out over the long term and is reliable.

In diesel engines, on-board diagnostics of the DOC are typically based on the exotherm generated by a post-injection (i.e. the injection of fuel during the exhaust stroke), see FR 2914693 A1. The post-injection increases the amount of uncombusted HC in the exhaust stream, which will be converted in the DOC into water and $CO_2$. This conversion involves exothermic oxidation reactions that produce an amount of heat that is directly linked to the pre-DOC concentration (i.e. the amount of HC entering the DOC). As it is known to those skilled in the art, it is this exotherm generation that is used in the regeneration of diesel particulate filters (DPF) to increase the temperature of the exhaust gases in order to burn the accumulated soot.

Accordingly, the DOC diagnostic in a diesel engine is typically performed during the regeneration mode of the DPF, which implies a combustion mode with post-injection. The typical conversion efficiency diagnostic consists in monitoring the exotherm of the DOC by comparing the pre- and post-DOC temperatures of the exhaust gases, and thus check whether a post-injection actually causes an increase in the exhaust-gases downstream of the DOC. Performing the diagnostic during a DPF regeneration mode also ensures that the DOC is at a relatively high temperature, since a minimum temperature of the DOC is required for enabling the conversion.

OBJECT OF THE INVENTION

The object of the present invention is to provide an alternative method of monitoring an oxidation catalyst that permits a reliable, long term monitoring of the catalyst conversion efficiency.

SUMMARY OF THE INVENTION

The present invention is based on the observation that when the diagnostic of a catalytic converter is performed in a high temperature range thereof, as is typically the case during a regeneration event, there is a risk of erroneous assessment. The reason for this is that an (highly) aged catalytic converter can still have a good efficiency in the high temperature range and be inefficient in a colder temperature range of an emission test cycle. Therefore, a regeneration event with a high DOC temperature and/or a high temperature of engine-out exhaust gases cannot be used to safely diagnose a DOC.

To overcome these drawbacks, the present invention proposes a method as claimed in claim 1.

The present invention relates to a method for monitoring an oxidation catalyst in an exhaust line of an internal combustion engine, wherein a catalyst diagnostic event comprises a test cycle during which a conversion capability of the oxidation catalyst is determined based on the exotherm generated by post-injection of fuel. According to an important aspect of the invention, the diagnostic event may only be initiated when the temperature of the oxidation catalyst lies within a predetermined temperature range.

Furthermore, the test cycle comprises a post-injection event and an exotherm monitoring period that lasts, after the post-injection event, until essentially all of the heat stored in the oxidation catalyst has been evacuated.

The predetermined temperature range is advantageously selected to be able to discriminate between a new or mildly aged catalyst and an aged catalyst, and should thus cover a temperature range for which it is expected that the conversion efficiency of a highly aged catalyst will be sensibly below that of a more recent, functional catalyst (i.e. operating satisfactorily).

An alert signal may then be triggered when the conversion efficiency drops below a conversion efficiency alert threshold.

In one embodiment, the predetermined temperature range is selected to correspond to a transition zone of the conversion efficiency for a reference oxidation catalyst with given ageing. In other words, the predetermined temperature range is preferably selected to correspond to a temperature range where the conversion efficiency of the reference oxidation catalyst with a selected ageing is less than 100%, and more preferably has a conversion efficiency sensibly lower than that of a less aged, functional oxidation catalyst. As it will be understood, the values of conversion efficiency values at different temperatures for the reference oxidation catalyst are calibrated and determined by experimentation.

More preferably, the upper temperature limit of the predetermined temperature range corresponds to a conversion efficiency of no more than 90% for the aged, reference oxidation catalyst.

In a preferred embodiment, the predetermined temperature range is selected so that its lower and upper temperature limits correspond to a conversion efficiency of about 40 to 80%, respectively, for an aged, reference oxidation catalyst, more preferably 40 to 60%.

Preferably, a further criterion for the lower temperature limit of the predetermined temperature range is that it shall at least correspond to a predetermined conversion efficiency of a functional oxidation catalyst (with given ageing), which is preferably of at least 50 %.

As it will be understood, the present diagnostic event is advantageously performed when the engine is not operated in a DPF regeneration mode.

For increased accuracy of the diagnostic event, the latter is cancelled in case the temperature of the oxidation catalyst exits the predetermined temperature range. This in particular if it happens during the post-injection event.

Also for enhanced accuracy, the oxidation catalyst temperature may be monitored by means of a multi-slice model, and the diagnostic event may only be triggered and/or performed when the respective temperatures of all of said slices lie within the predetermined temperature range.

Further, during the diagnostic cycle the engine parameters may advantageously be set to minimize the amount of HC in the engine-out exhaust gases, except for the post injection.

According to one embodiment, the measured exotherm is determined by monitoring the temperature of exhaust gases exiting the oxidation catalyst for a given time period after a post-injection.

BRIEF DESCRIPTION OF THE DRAWINGS

The present invention will now be described, by way of example, with reference to the accompanying drawings, in which:

FIG. 1: is a graph showing the effects of ageing on catalyst efficiency;

FIG. 2: is a graph showing the measured DOC-out exhaust gas temperature ($T_{out}$) and the model exhaust gas temperature without post-injection ($T_{out\text{-}mod}$).

DETAILED DESCRIPTION OF A PREFERRED EMBODIMENT

The present method will now be explained with respect to a preferred embodiment applied to the field of diesel oxidation catalysts (DOC).

As it is known to those skilled in the art, DOCs are now commonly found in the exhaust system of diesel motor vehicles. They are often arranged upstream of a diesel particulate filter (DPF) for assisting in the regeneration thereof.

Indeed, in order to eliminate soot particles collected in a DPF, it is conventional to increase the temperature of the exhaust gases by operating the engine in an adapted combustion mode involving (1) split and retarded fuel injections; and (2) performing post-injection to increase the amount of unburned HC in the exhaust gases. The unburned HC undergoes in the DOC exothermic oxidation reactions, and is converted into water and carbon dioxide.

As explained above, it is desirable to monitor the conversion performance of the DOC. Conventional DOC diagnostic is performed during DPF regeneration events and based on the exothermic effect of the DOC caused by post-injection. While performing the DOC diagnostic event during a regeneration event ensures that the DOC temperature will be above the minimum temperature required for enabling the catalyst material, there is a risk of erroneous assessment.

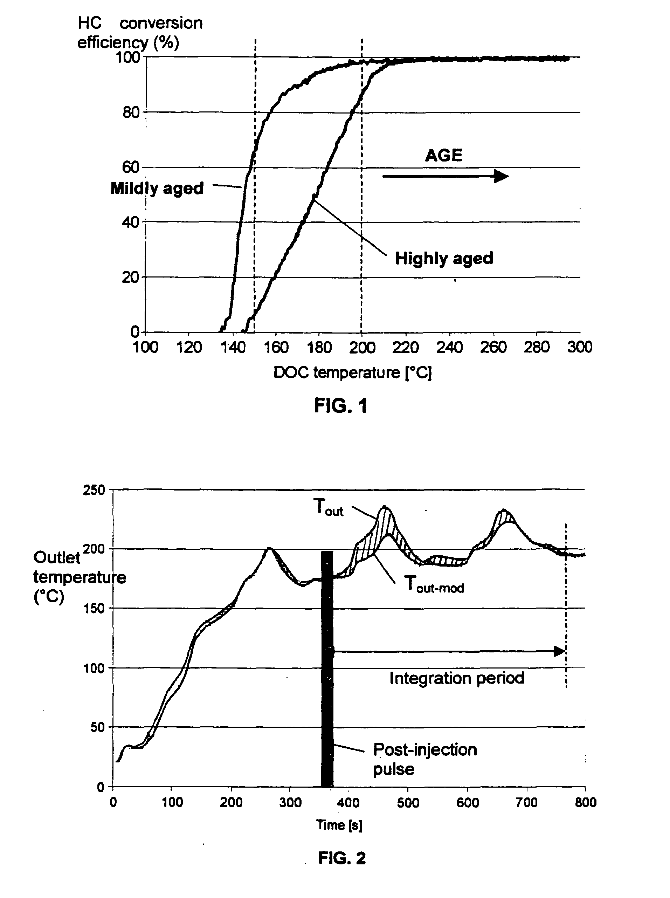

This problem can be better understood from Fig. 1, which shows the effect of ageing on a DOC, the HC conversion efficiency being plotted vs. DOC temperature. As it can be seen, an aged catalytic converter can still have a good efficiency in the high temperature range (e.g. typically above 300°C for many DOCs). However, the highly aged catalyst clearly has a worse or unacceptable conversion efficiency at lower temperatures (e.g. below 250°C).

To ensure a reliable, long term monitoring of catalytic converters, namely DOCs, the present method proposes to perform the DOC diagnostic event at lower or moderate temperatures, where it is actually possible to assess the ageing status of the DOC and not simply whether it is broken or not. In the case of the ageing behaviour shown in Fig. 1, the temperature window during which the diagnostic event can be formed in accordance with the present method is e.g. 150 to 200°C.

Therefore, the diagnostic event is preferably performed when the engine is operated normally (normal combustion mode, e.g. lean burn) but not in a regeneration mode of DPF that causes high temperature exhaust gases and thus brings the DOC in the high temperature range.

The DOC temperature is preferably monitored according to a multi-sliced model, i.e. the DOC is virtually divided into multiples slice and an algorithm is used to determine the temperature in each slice based on one or more temperature measurements of the DOC.

In the present method, the oxidation catalyst diagnostic event is thus performed when the DOC is in the predetermined temperature window, as explained above. This temperature window will typically be calibrated based on experimental testing, simulation, forced ageing test, etc. for a given make and type of catalyst.

The diagnostic event involves the following test cycle. While it has been checked that the DOC temperature is within the prescribed window, and that the engine is not operated in a DPF regeneration mode or other rich combustion mode, a post-injection of a metered quantity of fuel is performed. As it is used herein, the term post-injection designates the injection of fuel either in-cylinder or in the exhaust piping, before the DOC, at a timing where no or little combustion occurs. In-cylinder post injection may typically be executed towards the end of the power stroke (or later). However, as compared to the post-injection traditionally performed in DPF regeneration mode, the amount of fuel that is injected in the post-injection pulse is comparatively smaller. Indeed, the objective is not to actually bring the DOC in the high temperature range, but to monitor the consequence of the post-injection and check whether it results in the expected exotherm or not. Hence, typically a small quantity of post fuel (e.g. a few grams) is injected to generate a temporary exotherm in the DOC.

As soon as the post-injection has been performed, the heat generated by the DOC is accumulated (taken into account by the algorithm implementing the test cycle). This is preferably done by measuring the temperature of the exhaust gases at the DOC outlet (or downstream thereof). When all the heat stored in the DOC has been evacuated in the exhaust gases, the heat accumulation stops and is compared to the theoretical heat that the post fuel should have produced. The conversion efficiency is then calculated as the ratio of the accumulated heat to the theoretical heat that the post fuel should have produced.

To evaluate the exotherm, we consider that the instantaneous total heat energy of the exhaust gases that exit the DOC corresponds to the sum of the heat energy of the exhaust gases that enter the DOC and the heat energy due to the exotherm that is linked to the injected fuel quantity, however corrected by a term representative of transients namely taking into account the thermal inertia of the DOC. This instantaneous heat energy balance of the DOC can be expressed as follows:

$$\dot{m} \cdot Cp \cdot T_{out} = \dot{m} \cdot Cp \cdot T_{in} + \dot{q}_f \cdot H \cdot \eta - \frac{dQ_{DOC\_stored}}{dt} \qquad (1)$$

where
$T_{in}$: represents the exhaust gas temperature at the DOC inlet;
$T_{out}$: represents the exhaust gas temperature at the DOC outlet;
$\eta$: is the DOC conversion efficiency;

$m$: represents the mass flow of the exhaust gases;

$Cp$: represents the heat capacity of the exhaust gases;

$q_f$: represents the fuel quantity introduced in the exhaust gases by the post fuel injection;

$Q_{DOC-stored}$: is the heat energy stored in the DOC material;

$H$: is the fuel heating value.

When integrating it over a time period t, relation (1) is equivalent to:

$$\eta = \frac{\sum \dot{m} \cdot Cp \cdot (T_{out} - T_{out-mod})}{q_f \cdot H} \qquad (2)$$

Where $T_{out-mod}$ represents a model DOC-out exhaust gas temperature of an "inert" DOC, i.e. when no post-injection is performed and thus typically without exotherm. It may be noted that in this mathematical approach, $T_{out-mod}$ is equivalent to a stabilized $T_{in}$; and $q_f H$ corresponds to the theoretical exotherm.

The principle of this integration is illustrated in Fig.2, wherein the measured exhaust gas temperature $T_{out}$ and the modeled exhaust gas temperature without post-injection $T_{out-mod}$ are plotted vs. time. The integration is started with the post injection pulse and performed until all the heat accumulated in the DOC is eliminated.

Hence in the present method, the test cycle starts with a small post-injection pulse/event and comprises an exotherm monitoring period during which the exotherm is monitored and that lasts until essentially all of the heat due to the post-injection and stored in the catalyst has been evacuated. Preferably, the exotherm monitoring period starts with the post-injection event and is continued after the post-injection event, until all of the heat has been evacuated. Typically, the monitoring of the heat in the catalyst implies measuring the exhaust gas temperature at the DOC outlet ($T_{out}$), and the heat is accumulated (integrated) in order to determine the quantity of heat (i.e. the exotherm) actually generated by the post-injection event. The end of the monitoring period and thus the elimination of the heat due to the exotherm can be determined by comparing the exhaust gas temperature at the DOC outlet $T_{out}$ to the model DOC-out exhaust gas temperature $T_{out-mod}$. When the difference $T_{out}$- $T_{out-mod}$ drops below a predetermined threshold, it can be concluded that the heat has evacuated and the monitoring can be stopped. In other words, the monitoring period ends when $T_{out}$ and $T_{out-mod}$ are substantially equal.

Alternatively, the end of the exotherm monitoring period can be indicated by the expiry of a calibrated timer. Such timer can have a duration that is known (from experimentation/testing) to be greater than the time required for the exotherm (caused by the known post-fuel injection) to be evacuated.

As it is clear to those skilled in the art, the post-injection event shown in Fig.2 can be a continuous pulse when injected directly in the exhaust line, but will correspond to multiple additional fuel amounts when injected in the cylinder.

For exemplary purposes, which shall not be construed as limiting, it is considered that the injection of a post-fuel amount of 1 to 15 g during a period of 1 to 20 s is suitable for conducting the present diagnostic with most types of oxidation catalyst currently in use in automotive vehicles. With such post-injection fuel, it is expected that the exotherm monitoring period will last between 1 and 10 minutes.

In order to provide an accurate result of the efficiency, the exact amount of fuel entering the DOC ($q_f$) must be known and is thus precisely metered. For an enhanced accuracy, the post fuel injected is preferably corrected for engine-out temperature and exhaust flow, using e.g. a calibratable correction factor.

Also, to avoid noise due to engine-out HC amounts that are not induced by post injection, the EGR rate (Exhaust Gas Recirculation) for cars equipped with an EGR valve permitting to recirculate part of the exhaust gases back to the intake manifold, is preferably reduced to a predetermined value during the diagnostic event. Also, any other parameter that may affect the engine-out HC concentration, e.g. swirl in the combustion chamber, is preferably set, for the duration of the diagnostic event, to a predetermined value that minimizes the engine-out HC.

It remains to be noted that usual oxidation catalyst technologies are based on zeolites, which have a substantial HC storing effect at low temperature (typically <250°C). To avoid unknown accumulation of HC in the DOC prior to a diagnostic event, the start of the diagnostic event is prevented when the DOC has been running more than a predetermined time period below a predetermined temperature threshold. This may typically be the case if the engine has been running idle for a while. A diagnostic event may subsequently be started when it is observed that the DOC temperature has increased above the temperature threshold, provided the other required conditions are met.

Besides, for a reliable DOC performance monitoring, the diagnostic event is preferably cancelled if the DOC temperatures goes out of the diagnostic temperature window. And in particular if the DOC temperature goes out of the diagnostic temperature window during the performance of the post-injection event of the test cycle. In this respect it may be noted that since the post-injection is relatively short, the likelihood that the DOC temperature exits the diagnostic temperature window is low.

It shall further be appreciated that due to the fact that only a short post-injection event (and a thus a small fuel amount as compared to the fuel amounts typically post-injected in regeneration mode) is used in the test cycle, the generated exotherm will typically not cause an overheating of the DOC that will bring its temperature outside the diagnostic window.

Referring now more specifically to the selection of the diagnostic temperature window, the idea is to operate the diagnostic in a DOC temperature window where an aged, namely a highly aged catalyst cannot be assessed as less aged catalyst. In practice this implies determining the limits of the diagnostic temperature window based on a highly aged catalyst that serves as a reference (reference oxidation catalyst). The upper limit of the window should be selected to correspond to a conversion efficiency below 100% of the reference catalyst, preferably below 90%. In the example of Fig.1, this means a upper limit for the time window of 200°C. The lower limit may be, as already mentioned 150°C, which is a temperature at which conversion is enabled, although quite low. An additional criterion for selecting the lower limit may be that the temperature is sufficient for a functional oxidation catalyst, e.g. as the mildly aged catalyst of Fig. 1, to reach the light-off point, i.e. a conversion efficiency of 50% (which is the case here at 150°C).

In an alternative, preferred embodiment, the diagnostic temperature window may be selected to correspond to a conversion efficiency ranging from 40 to 60% for the reference, highly aged catalyst. Applying this to Fig.1, it can be deduced from the curve of the highly aged catalyst (reference) that the corresponding diagnostic temperature window is 170°C to 185°C. As it can be seen, this temperature range corresponds to a steep transition zone of the conversion efficiency of this reference (highly aged) catalyst. It is notably remote from the conversion efficiency curve of the mildly aged catalyst.

Still with reference to the example of Fig.1, if the determined conversion efficiency is below 40% in this predetermined diagnostic temperature window (170-185°C), then it is concluded that the oxidation catalyst needs to be replaced and an alert signal is generated.

The present method can be easily implemented in the ECU of an internal combustion engine and does not require additional, specific equipment (for most engines/vehicles).

## Claims

1. Method for monitoring an oxidation catalyst in an exhaust line of an internal combustion engine, wherein a catalyst diagnostic event comprises a test cycle during which a conversion capability of said oxidation catalyst is determined based on the exotherm generated by post-injection of fuel,
   wherein
   said diagnostic event may only be initiated when the temperature of said oxidation catalyst lies within a predetermined temperature range,
   **characterized in that** said test cycle comprises a post-injection event and an exotherm monitoring period that lasts, after said post-injection event, until essentially all of the heat stored in said oxidation catalyst has been evacuated.

2. Method according to claim 1, wherein the exotherm is evaluated by measuring the temperature of exhaust gases exiting said oxidation catalyst during said exotherm monitoring period.

3. Method according to claim 1 or 2, wherein said exotherm monitoring period ends when the exhaust gas temperature at the catalyst outlet ($T_{out}$) and the model catalyst-out exhaust gas temperature $T_{out-mod}$ are substantially equal.

4. Method according to claim 1 or 2, wherein said exotherm monitoring period ends when the difference between the exhaust gas temperature at the catalyst outlet ($T_{out}$) and the model catalyst-out exhaust gas temperature $T_{out-mod}$ drops below a predetermined threshold.

5. Method according to claim 1 or 2, wherein said exotherm monitoring period ends with the expiry of a calibrated timer.

6. Method according to any one of the preceding claims, wherein said predetermined temperature range is selected to correspond to a transition zone of the conversion efficiency for a reference oxidation catalyst with given ageing.

7. Method according to any one of the preceding claims, wherein said predetermined temperature range is selected so that the upper temperature limit corresponds to a conversion efficiency of no more than 90% for an aged, reference oxidation catalyst.

8. Method according to any one of the preceding claims, wherein said predetermined temperature range is selected so that the lower and upper temperature limits correspond to a conversion efficiency of about 40 to 80%, respectively, for an aged, reference oxidation catalyst, preferably 40 to 60%.

9.  Method according to any one of the preceding claims, wherein the lower temperature of said predetermined temperature range is selected to at least correspond to a predetermined conversion efficiency of a functional, reference oxidation catalyst, said predetermined conversion efficiency being preferably of at least 50 %.

10. Method according to any one of the preceding claims, wherein said diagnostic event is performed when the engine is not operated in a DPF regeneration mode.

11. Method according to any one of the preceding claims, wherein said diagnostic event is cancelled in case the temperature of said oxidation catalyst exits said predetermined temperature range.

12. Method according to any one of claims 1 to 10, wherein said diagnostic event is cancelled in case the temperature of said oxidation catalyst exits said predetermined temperature range during the performance of said post-injection event.

13. Method according to any one of the preceding claims, wherein the oxidation catalyst temperature is monitored by means of a multi-slice model, and said diagnostic event may only be triggered and/or performed when the respective temperatures of all of said slices lie within said predetermined temperature range.

14. Method according to any one of the preceding claims, wherein during said diagnostic cycle engine parameters are set to minimize the amount of HC in the engine-out exhaust gases, except for the post injection.

15. Method according to any one of the preceding claims, wherein an alert signal is triggered when said conversion efficiency drops below a conversion efficiency alert threshold.

**Patentansprüche**

1.  Verfahren zum Überwachen eines Oxidationskatalysators in einer Abgasleitung einer Verbrennungskraftmaschine, wobei ein Katalysatordiagnosereignis einen Testzyklus umfasst, während dessen eine Umwandlungsfähigkeit des genannten Oxidationskatalysators auf Basis der durch die Nacheinspritzung von Kraftstoff erzeugten exothermen Verbindung ermittelt wird,
    wobei das genannte Diagnoseereignis nur eingeleitet werden kann, wenn die Temperatur des genannten Oxidationskatalysators innerhalb eines vorbestimmten Temperaturbereichs liegt,
    **dadurch gekennzeichnet, dass** der genannte Testzyklus ein Nacheinspritzungsereignis und einen Zeitabschnitt der Überwachung der exothermen Verbindung aufweist, die nach dem genannten Nacheinspritzungsereignis andauert, bis im Wesentlichen sämtliche in dem genannten Oxidationskatalysator gespeicherte Wärme abgeführt worden ist.

2.  Verfahren nach Anspruch 1, wobei die exotherme Verbindung durch Messen der Temperatur von Abgasen gemessen wird, die während des genannten Zeitabschnitts der Überwachung der exothermen Verbindung den genannten Oxidationskatalysator verlassen.

3.  Verfahren nach Anspruch 1 oder 2, wobei der genannte Zeitabschnitt der Überwachung der exothermen Verbindung endet, wenn die Abgastemperatur am Katalysatorauslass ($T_{out}$) und die Modell-Katalysatorauslass-Abgastemperatur $T_{out-mod}$ im Wesentlichen gleich sind.

4.  Verfahren nach Anspruch 1 oder 2, wobei der genannte Zeitabschnitt der Überwachung der exothermen Verbindung endet, wenn die Differenz zwischen der Abgastemperatur am Katalysatorauslass ($T_{out}$) und der Modell-Katalysatorauslass-Abgastemperatur $T_{out-mod}$ unter einen vorbestimmten Schwellenwert abfällt.

5.  Verfahren nach Anspruch 1 oder 2, wobei der genannte Zeitabschnitt der Überwachung der exothermen Verbindung mit dem Ablauf eines kalibrierten Zeitgebers endet.

6.  Verfahren nach einem der vorhergehenden Ansprüche, wobei der genannte vorbestimmte Temperaturbereich so ausgewählt wird, dass er einer Übergangszone des Umwandlungswirkungsgrads für einen Referenz-Oxidationskatalysator mit bestimmter Alterung entspricht.

**7.** Verfahren nach einem der vorhergehenden Ansprüche, wobei der genannte vorbestimmte Temperaturbereich so ausgewählt wird, dass die obere Temperaturgrenze einem Umwandlungswirkungsgrad von höchstens 90 % für einen gealterten Referenz-Oxidationskatalysator entspricht.

**8.** Verfahren nach einem der vorhergehenden Ansprüche, wobei der genannte vorbestimmte Temperaturbereich so ausgewählt wird, dass die untere und die obere Temperaturgrenze einem Umwandlungswirkungsgrad von etwa 40 % bzw. 80 % für einen gealterten Referenz-Oxidationskatalysator, vorzugsweise 40 % bzw. 60 %, entspricht.

**9.** Verfahren nach einem der vorhergehenden Ansprüche, wobei die untere Temperatur des genannten vorbestimmten Temperaturbereichs so ausgewählt wird, dass sie mindestens einem vorbestimmten Umwandlungswirkungsgrad eines funktionsfähigen Referenz-Oxidationskatalysators entspricht, wobei der genannte vorbestimmte Umwandlungswirkungsgrad vorzugsweise wenigstens 50 % beträgt.

**10.** Verfahren nach einem der vorhergehenden Ansprüche, wobei das genannte Diagnoseereignis durchgeführt wird, wenn der Motor nicht in einem DPF-Regerationsmodus betrieben wird.

**11.** Verfahren nach einem der vorhergehenden Ansprüche, wobei das genannte Diagnoseereignis gestrichen wird, falls die Temperatur des genannten Oxidationskatalysators den genannten vorbestimmten Temperaturbereich verlässt.

**12.** Verfahren nach einem der Ansprüche 1 bis 10, wobei das genannte Diagnoseereignis gestrichen wird, falls die Temperatur des genannten Oxidationskatalysators während der Durchführung des genannten Nacheinspritzungsereignisses den vorbestimmten Temperaturbereich verlässt.

**13.** Verfahren nach einem der vorhergehenden Ansprüche, wobei die Oxidationskatalysatortemperatur mithilfe eines Multislice-Modells überwacht wird und das Diagnoseereignis nur ausgelöst und/oder durchgeführt werden kann, wenn die jeweiligen Temperaturen aller genannten Slices innerhalb des genannten vorbestimmten Temperaturbereichs liegen.

**14.** Verfahren nach einem der vorhergehenden Ansprüche, wobei während des genannten Diagnosezyklus, ausgenommen der Nacheinspritzung, Motorparameter zur Minimierung der HC-Menge in den aus dem Motor austretenden Abgasen eingestellt werden.

**15.** Verfahren nach einem der vorhergehenden Ansprüche, wobei ein Warnsignal ausgelöst wird, wenn der genannte Umwandlungswirkungsgrad unter eine Umwandlungswirkungsgrad-Warnschwelle abfällt.

**Revendications**

**1.** Procédé pour surveiller un catalyseur d'oxydation dans une ligne d'échappement d'un moteur à combustion interne, dans lequel un événement de diagnostic de catalyseur comprend un cycle test pendant lequel une capacité de conversion dudit catalyseur d'oxydation est déterminée en se basant sur la réaction exothermique générée par post-injection de carburant,
dans lequel
ledit événement de diagnostic peut être uniquement initialisé quand la température dudit catalyseur d'oxydation tombe dans une plage de température prédéterminée,
**caractérisé en ce que** ledit cycle test comprend un événement de post-injection, jusqu'à ce que essentiellement toute la chaleur stockée dans ledit catalyseur d'oxydation ait été évacuée.

**2.** Procédé selon la revendication 1, dans lequel la réaction exothermique est évaluée en mesurant la température des gaz d'échappement sortant dudit catalyseur d'oxydation pendant ladite période de surveillance de réaction exothermique

**3.** Procédé selon la revendication 1 ou 2, dans lequel ladite période de surveillance de réaction exothermique se termine quand la température des gaz d'échappement à la sortie du catalyseur ($T_{out}$) et la température modèle des gaz d'échappement à la sortie du catalyseur ($To_{ut\text{-}mod}$) sont sensiblement égales.

**4.** Procédé selon la revendication 1 ou 2, dans lequel ladite période de surveillance de réaction exothermique se termine quand la différence entre la température des gaz d'échappement à la sortie du catalyseur ($T_{out}$) et la

température modèle des gaz d'échappement à la sortie du catalyseur ($T_{out\text{-}mod}$) tombe au-dessous d'un seuil prédéterminé.

**5.** Procédé selon la revendication 1 ou 2, dans lequel ladite période de surveillance de réaction exothermique se termine avec l'expiration d'un temporisateur calibré.

**6.** Procédé selon l'une quelconque des revendications précédentes, dans lequel ladite plage de température prédéterminée est choisie de manière à correspondre avec une zone de transition de l'efficacité de conversion pour un catalyseur d'oxydation de référence avec un vieillissement donné.

**7.** Procédé selon l'une quelconque des revendications précédentes, dans lequel ladite plage de température prédéterminée est choisie de telle façon que la limite de température supérieure corresponde à une efficacité de conversion qui ne dépasse pas 90 % pour un catalyseur d'oxydation de référence vieilli.

**8.** Procédé selon l'une quelconque des revendications précédentes, dans lequel ladite plage de température prédéterminée est choisie de telle façon que la limite de température inférieure et la limite de température supérieure correspondent à une efficacité de conversion d'environ 40 à 80 %, respectivement, pour un catalyseur d'oxydation de référence vieilli, de préférence de 40 à 60 %.

**9.** Procédé selon l'une quelconque des revendications précédentes, dans lequel la température inférieure de ladite plage de température prédéterminée est choisie pour correspondre au moins à une efficacité de conversion prédéterminée d'un catalyseur d'oxydation de référence fonctionnelle, ladite efficacité de conversion prédéterminée étant de préférence d'au moins 50 %.

**10.** Procédé selon l'une quelconque des revendications précédentes, dans lequel ledit événement de diagnostic est exécuté quand le moteur ne fonctionne pas dans un mode de régénération DPF.

**11.** Procédé selon l'une quelconque des revendications précédentes, dans lequel ledit événement de diagnostic est annulé dans le cas où la température dudit catalyseur d'oxydation sort de ladite plage de température prédéterminée.

**12.** Procédé selon l'une quelconque des revendications 1 à 10, dans lequel ledit événement de diagnostic est annulé dans le cas où la température dudit catalyseur d'oxydation sort de ladite plage de température prédéterminée pendant l'exécution dudit événement de post-injection.

**13.** Procédé selon l'une quelconque des revendications précédentes, dans lequel la température du catalyseur d'oxydation est surveillée au moyen d'un modèle à tranches multiples, et ledit événement de diagnostic peut être uniquement déclenché et/ou exécuté quand les températures respectives de toutes lesdites tranches tombent dans ladite plage de température prédéterminée.

**14.** Procédé selon l'une quelconque des revendications précédentes, dans lequel pendant ledit cycle de diagnostic des paramètres moteur sont fixés pour minimiser la quantité de HC dans les gaz d'échappement sortant du moteur, à l'exception de la post-injection.

**15.** Procédé selon l'une quelconque des revendications précédentes, dans lequel un signal d'alerte est déclenché quand ladite efficacité de conversion tombe au-dessous d'un seuil d'alerte d'efficacité de conversion.

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2914693 A1